# EUROPÄISCHE PATENTSCHRIFT

(11) **EP 1 415 527 B1**
(45) Veröffentlichungstag und Bekanntmachung des Hinweises auf die Patenterteilung: **12.04.2006**
(21) Anmeldenummer: 03103547.0
(22) Anmeldetag: 25.09.2003
(51) Int. Cl.: A01D 41/14

(54) **Verstelleinrichtung für ein bewegliches Element eines Erntevorsatzes**
Adjusting device for a moveable element of a harvester head
Dispositif de réglage pour un élément mobile d'une tête de récolte

(30) Priorität: 29.10.2002 DE 10250337
(43) Veröffentlichungstag der Anmeldung: 06.05.2004
(73) Patentinhaber: Maschinenfabrik Kemper GmbH & Co. KG, 48973 Stadtlohn (DE)
(72) Erfinder: Rickert, Clemens, 48703, Stadtlohn (DE)
(74) Vertreter: Holst, Sönke

(56) Entgegenhaltungen:
- US-A- 1 693 475
- US-A- 2 682 740
- US-A- 3 683 601
- US-A- 4 179 870

## Beschreibung

Die Erfindung betrifft einen Erntevorsatz mit einem schwenkbar an einem Mittelteil des Erntevorsatzes angelenkten Seitenteil, dem eine Verstelleinrichtung mit einem Verstellantrieb zugeordnet ist, der eingerichtet ist, den Seitenteil von der ersten Stellung über eine zweite Stellung in eine dritte Stellung zu bewegen, wobei der Seitenteil in der zweiten Stellung gegenüber der ersten Stellung und gegenüber der dritten Stellung angehoben ist.

Aufgrund der gesetzlichen Einschränkungen der Breite am Straßenverkehr teilnehmender Fahrzeuge ist es in der Landwirtschaftstechnik gebräuchlich, Teile von Erntevorsätzen zwischen einer Betriebsstellung, in der sie parallel zum Erdboden orientiert sind, und einer Transportstellung, in der sie um einen Winkel von etwa 90° nach oben bzw. um einen Winkel von etwa 180° nach innen geschwenkt sind, zu bewegen, so dass die Breite des Erntevorsatzes in der Transportstellung vermindert ist. Es besteht z. B. die Möglichkeit, nur äußere Seitenteile nach oben oder innen zu verschwenken (EP 0 553 506 A), oder zwei Hälften eines mittig teilbaren Erntevorsatzes nach oben zu schwenken (US 3 683 601 A).

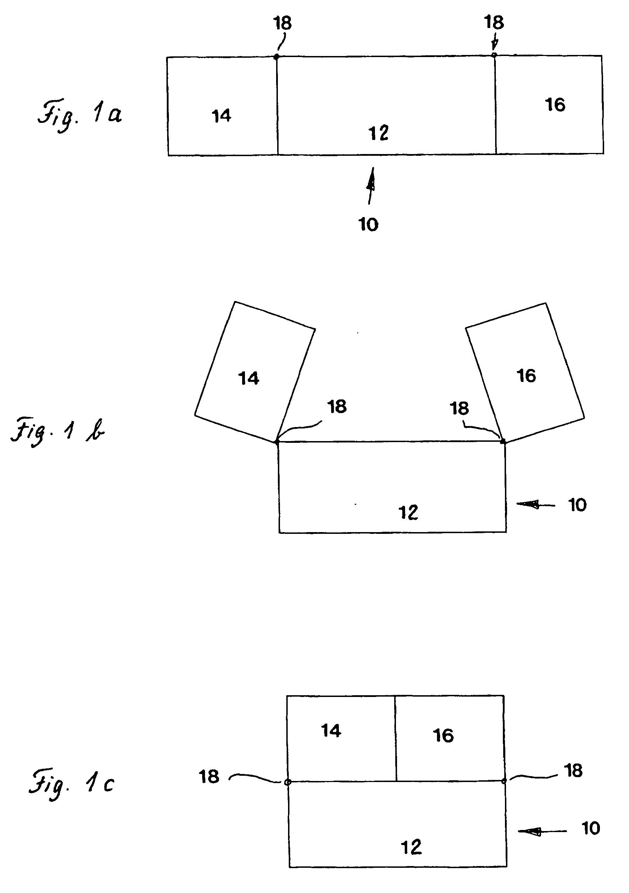

Ein derartiger Schwenkvorgang ist in den drei Teilen der Figur 1 dargestellt. In der Figur 1a ist der aus einem starr oder pendelnd an einem Erntefahrzeug anbringbare Mittelteil 12, einem an der in Vorwärtsrichtung linken Seite am Mittelteil 12 durch eine horizontal und in Vorwärtsrichtung verlaufende Schwenkachse 18 angelenkten linken Seitenteil 14 und einem an der rechten Seite des Mittelteils 12 durch eine ebenfalls horizontal und in Vorwärtsrichtung verlaufende Schwenkachse 18 angelenkten rechten Seitenteil 16 aufgebaute Erntevorsatz 10 in seiner Betriebsstellung dargestellt, in der die Teile 12-16 horizontal orientiert sind, um Pflanzen von einem Feld zu ernten. In der Figur 1b sind die Seitenteile 14, 16 um etwa 115° um die Schwenkachsen 18 in eine Zwischenstellung nach innen und oben verschwenkt, während sie in der Figur 1c um 180° nach innen verschwenkt sind und in ihrer Transportstellung platzsparend oberhalb des Mittelteils 12 liegen.

Die zum Verschwenken der Seitenteile 14, 16 erforderlichen Schwenkkräfte werden in der Regel durch Hydraulikzylinder aufgebracht. Die vom Verstellantrieb aufzubringenden Kräfte steigen ausgehend von der Betriebsstellung zunächst an, durchlaufen ein Maximum und sinken danach ab. Bei der in Figur 1b dargestellten Zwischen- oder Gleichgewichtsstellung ist etwa ein Gleichgewicht erreicht, d. h. der Verstellantrieb muss fast keine Kraft zum Halten des Seitenteils 14, 16 aufbringen. Beim weiteren Verschwenken wirken entgegengesetzte Kräfte, da nunmehr der Verstellantrieb nicht mehr die Seitenteile 14, 16 anheben, sondern nur noch abstützen muss. Werden die Seitenteile 14, 16 wieder in die Betriebsstellung verbracht, muss der Verstellantrieb Kräfte mit gleichen Beträgen, aber entgegengesetzter Richtung aufbringen. Die Verstellantriebe sind hinreichend groß zu dimensionieren, damit sie auch die Kraftmaxima kurz nach dem Anfang der Schwenkbewegung aufnehmen können.

In der US 3 683 601 A wird ein Schneidwerk für einen Mähdrescher vorgeschlagen, bei dem jeweils eine Feder zwischen dem Verstellantrieb und den anhebbaren Schneidwerkshälften angeordnet ist. Diese Feder ermöglicht in der Betriebsstellung Pendelbewegungen des Schneidwerks und soll, falls das Schneidwerk beim Schwenken in die Transportstellung gegen Hindernisse stößt, helfen, Schäden zu vermeiden. Einen Einfluss auf die Maximalwerte der aufzubringenden Schwenkkräfte hat sie jedoch nicht.

Die DE 100 05 509 A beschreibt eine Aufhängung für beidseitig an einem Trägerfahrzeug angebrachte Arbeitsaggregate in Form von Mähwerken. Die Mähwerke sind an Zugfedern aufgehängt, um die Auflagekraft der Mähwerke auf den Erdboden zu definieren. Hydraulikzylinder verschwenken die Mähwerke zwischen der Betriebsstellung und der Transportstellung, in der die Mähwerke um etwa 90° nach innen und oben verschwenkt sind. Der Zweck der Federn ist hier ausschließlich das Festlegen der Auflagekraft der Mähwerke auf dem Boden.

In der US 4 179 870 A wird ein gezogenes Mähgerät beschrieben, bei dem ein Mähbalken mittels eines Hydraulikzylinders zwischen einer Betriebsstellung und einer angehobenen Schneidstellung anhebbar ist. Dabei wird der Hydraulikzylinder durch eine Feder unterstützt. Der Mähbalken kann durch den Hydraulikzylinder, ohne Unterstützung der Feder, in eine Transportstellung verbracht werden, in der er sich vertikal erstreckt.

Die der Erfindung zu Grunde liegende Aufgabe wird darin gesehen, eine verbesserte Verstelleinrichtung für einen Erntevorsatz bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der Erntevorsatz umfasst ein bewegliches Seitenteil und einen Verstellantrieb, der geeignet ist, es zwischen einer ersten Stellung und einer zweiten Stellung zu bewegen. In der zweiten Stellung ist der Schwerpunkt des Seitenteils gegenüber der ersten Stellung angehoben. Der Verstellantrieb muss somit Leistung aufbringen, um es entgegen der Schwerkraft aus der ersten in die zweite Stellung zu verbringen. Es wird vorgeschlagen, das Seitenteil mittels einer Feder in Richtung auf die zweite Stellung hin vorzuspannen. Dadurch wird die vom Verstellantrieb aufzubringende Leistung bzw. Kraft vermindert. Der Verstellantrieb kann das Seitenteil zwischen der ersten und zweiten Stellung verschwenken und/oder verschieben. Der Seitenteil wird weiterhin aus der ersten Stellung über die zweite Stellung hinaus in eine dritte Stellung bewegt, in der sich sein Schwerpunkt ebenfalls unterhalb der Lage des Schwerpunkts in der zweiten Stellung befindet. Der Verstellantrieb muss somit ebenfalls eine Leistung aufbringen, um den Seitenteil aus der dritten in die zweite Stellung zu bewegen. Es ist eine Feder vorgesehen, die den Seitenteil aus der dritten Stellung in Richtung auf die zweite Stellung hin vorspannt, um auch in diesem Fall die vom Verstellantrieb aufzubringende Leistung zu vermindern. Bei der Feder kann es sich um dieselbe Feder handeln, die auch den Seitenteil aus der ersten in die zweite Stellung vorspannt (d. h. um eine Feder, die sowohl zusammendrück- als auch auseinanderziehbar ist) oder um eine separate Feder.

Auf diese Weise kann der Verstellantrieb kleiner und preiswerter dimensioniert werden und schneller arbeiten als bei konventionellen Verstelleinrichtungen.

Ein Anwendungsfall für eine derartige Verstelleinrichtung ist ein Erntevorsatz, bei dem der Seitenteil zwischen einer Betriebsstellung (erste Stellung) über eine Zwischenstellung (zweite Stellung) in die Transportstellung (dritte Stellung) verbringbar ist. Beispiele sind Maisgebisse oder Maispflücker mit nach oben und innen klappbaren Seitenteilen. Falls der Schwenkwinkel des Seitenteils größer als 90° ist, ist beim Bewegen von der Betriebsstellung in die Transportstellung zunächst eine Kraft zum Anheben des Seitenteils gegen die Schwerkraft aufzubringen. Nach Durchlaufen der Zwischenstellung senkt sich der Schwerpunkt des Seitenteils wieder ab. Beim Bewegen aus der Transportstellung in die Betriebsstellung ist der Seitenteil ebenfalls zunächst anzuheben. Bei beiden Bewegungen unterstützt die Feder oder unterstützen die Federn das Anheben. Außerdem fangen sie einen Teil der beim Absenken des Seitenteils vom Verstellantrieb aufzunehmenden Kräfte ab.

In derartigen Fällen existiert zwischen der ersten und der dritten Stellung des Seitenteils eine Gleichgewichtsstellung, in der prinzipiell keine Kräfte des Verstellantriebs zum Halten des Seitenteils aufzubringen sind. Es bietet sich an, die oben genannte zweite Stellung mit der Gleichgewichtsstellung zusammenfallen zu lassen. Die Feder oder Federn spannt bzw. spannen den Seitenteil somit in die Gleichgewichtsstellung vor. Der Verstellantrieb wird durch die Federn in dem Bestreben unterstützt, den Seitenteil aus der Betriebs- oder Transportstellung in die Gleichgewichtsstellung zu verbringen. Über die Gleichgewichtsstellung hinweg in die Transport- oder Betriebsposition gelangt er ohne größeren Leistungsaufwand seitens des Verstellantriebs durch die Schwerkraft.

Die Feder oder die Federn ist oder sind in einer bevorzugten Ausführungsform geschützt innerhalb des Gehäuses des Schwenkantriebs, bei dem es sich in der Regel um einen Hydraulikzylinder handelt, angeordnet. Es ist aber auch möglich, sie außerhalb des Gehäuses anzubringen, um auf konventionelle Schwenkantriebe zurückgreifen zu können. Ein Verstellantrieb kann ein Seitenteil oder mehrere Seitenteile bewegen.

In den Zeichnungen ist ein nachfolgend näher beschriebenes Ausführungsbeispiel der Erfindung dargestellt. Es zeigt:
- Fig. 1: schematische Ansichten eines Erntevorsatzes von hinten, der sich in Fig. 1a in der Betriebsstellung, in Fig. 1b in einer Zwischen- oder Gleichgewichtsstellung und in Figur 1c in der Transportstellung befindet,
- Fig. 2: perspektivische Ansichten des Erntevorsatzes, der sich in Fig. 2a in der Betriebsstellung und in Fig. 2b in der Transportstellung befindet,
- Fig. 3: die beim Verschwenken der Seitenteile entstehenden Kraftverläufe, und
- Fig. 4: eine Ansicht eines Hydraulikzylinders zum Verschwenken eines der Seitenteile.

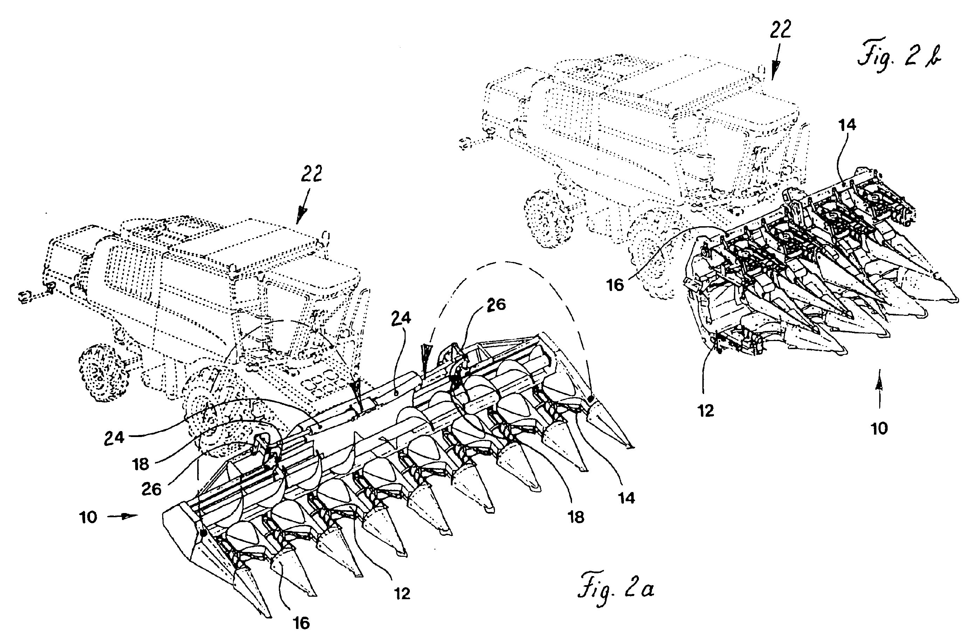

Der bereits weiter oben anhand der Figur 1 erläuterte Erntevorsatz 10 ist in der Figur 2 detaillierter dargestellt. Bei dem Erntevorsatz 10 handelt es sich um einen Maispflücker, der am Schrägförderer eines Mähdreschers 22 angebracht ist. Der Mittelteil 12 und die Seitenteile 14, 16 weisen jeweils vier bzw. zwei an sich bekannte Einzugs- und Pflückeinrichtungen mit um die Hochachse rotierenden Einzugselementen auf, die im Betrieb die Pflanzen durch einen Pflückspalt ziehen. Die Fruchtstände (Maiskolben) der Pflanzen werden dem Mähdrescher 22 zugeführt.

Um die Breite des Erntevorsatzes 10 zum Fahren auf einer öffentlichen Straße vermindern zu können, sind an der Oberseite eines Rahmens des Mittelteils 12 zwei sich quer zur Fahrtrichtung erstreckende Hydraulikzylinder 24 um fest mit dem Mittelteil verbundene, sich in Fahrtrichtung erstreckende Schwenkachsen 18 angelenkt. Die Kolbenstangen der Hydraulikzylinder 24 sind über Halterungen 26 mit den Oberseiten von Rahmen der Seitenteile 14, 16 verbunden. Durch Beaufschlagung der Hydraulikzylinder 24 werden mittels der Halterungen 26 die Linearbewegungen der Hydraulikzylinder 24 in Schwenkbewegungen umgesetzt und die Seitenteile 14, 16 um die horizontalen, sich in Fahrtrichtung erstreckenden Schwenkachsen 18 nach oben und innen geschwenkt, so dass sie in ihre Transportstellung gelangen, die in der Figur 2b dargestellt ist. In der Betriebsstellung (Figur 2a) sind die Seitenteile 14, 16 parallel zum Mittelteil 12 ausgerichtet und z. B. durch die Schwerkraft und/oder entsprechende Beaufschlagung des Hydraulikzylinders 24 und/oder durch Rastelemente starr damit verbunden. Die Hydraulikzylinder 24 sind doppeltwirkend, da am Anfang jeder der Schwenkbewegungen (von der Betriebsstellung in die Transportstellung und umkehrt) Hubkräfte aufzubringen sind.

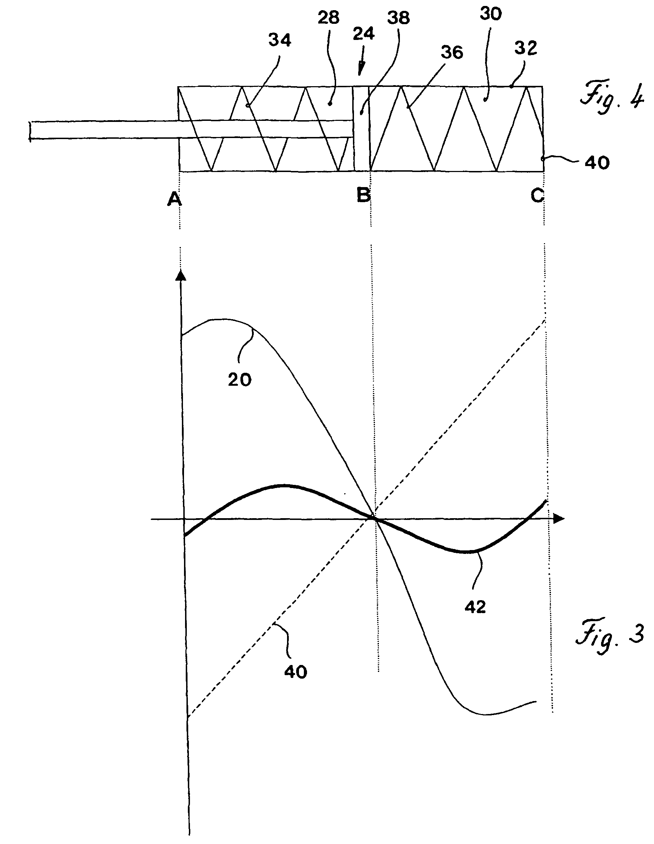

Wie bereits weiter oben erläutert, entstehen beim Verschwenken der Seitenteile 14, 16 des Erntevorsatzes 10 zeitlich variierende Schwenkkräfte. Sie sind in der Figur 3, die den Kraftverlauf in Abhängigkeit vom Hubweg eines den Schwenkvorgang bewerkstelligenden Hydraulikzylinders 24 darstellt, durch die Linie 20 repräsentiert. Beim Anheben eines der Seitenteile 14, 16 aus der Betriebsstellung (Figur 1a, A in Figur 3) wird die Kolbenstangenkammer 28 (s. Figur 4) des Hydraulikzylinders 24 beaufschlagt. Es ist zunächst eine relativ hohe, ansteigende Kraft aufzubringen, die nach Überschreiten eines Maximums wieder absinkt, bei der in Figur 1b (B in Figur 3) dargestellten Gleichgewichtsstellung null wird und danach negative Werte annimmt. Kurz vor Erreichen der Transportstellung (Figur 1c, C in Figur 3) nimmt der Betrag der Kraft, die nun keine Druckkraft mehr ist, sondern eine Zugkraft, da der Seitenteil 14, 16 durch die Schwerkraft nach unten gezogen wird, ein weiteres Maximum ein, um danach wieder geringfügig abzusinken.

Analog werden die Kolbenkammern 30 der Hydraulikzylinder 24 beaufschlagt, wenn die Seitenteile 14, 16 aus der Transport- in die Betriebsstellung zu verbringen sind. Zunächst sind ansteigende Kräfte aufzubringen, die bald absinken und sich nach Durchgang durch die in Figur 1b dargestellte Gleichgewichtsstellung von Druck- in Zugkräfte wandeln. Die Linie 20 entspricht dem von konventionellen Verstellantrieben aufzubringenden Kräften.

Die beiden Kraftmaxima legen bei herkömmlichen Erntevorsätzen die Dimensionierung und die Arbeitsgeschwindigkeit der Hydraulikzylinder 24 fest. Um mit kleineren Hydraulikzylindern 24 auszukommen, sind innerhalb des Gehäuses 32 der Hydraulikzylinder 24 Federn 34, 36 angeordnet. Eine erste, spiralförmige Feder 34 ist zwischen dem kolbenstangenseitigen Ende des Gehäuses 32 des Hydraulikzylinders 24 und dem Kolben 38 vorgesehen und eine zweite, ebenfalls spiralförmige Feder 36 zwischen dem Kolben 38 und dem Boden 40 des Gehäuses 32 des Hydraulikzylinders 24. Die Federn 34, 36 üben auf den Kolben 38 Kräfte aus, die bestrebt sind, ihn in etwa seine Mittelstellung zu bringen, die näherungsweise mit der in Figur 1b dargestellten Gleichgewichts- oder Zwischenposition der Seitenteile 14, 16 zusammenfällt. Die von den Federn 34, 36 auf den Kolben 38 ausgeübten Kräfte sind in der Figur 3 mit der Linie 40 gekennzeichnet. Die Linie 42 kennzeichnet den resultierenden Gesamtkraftverlauf.

Die Federn 34, 36 bewirken, dass die vom Kolben 38 aufzubringenden Kräfte wesentlich geringer sind als ohne die Federn 34, 36. Dadurch kann der Hydraulikzylinder 24 kleiner dimensioniert werden und größere Schwenkgeschwindigkeiten sind erreichbar.

Befindet sich der Kolben 38 in der Stellung A, die der Figur 1a entspricht, spannt die Feder 34, wie anhand der Figuren 3 und 4 erkennbar ist, den Kolben 38 in Richtung der Stellung B, die der Figur 1b entspricht, vor. Die Feder 36 ist dann wirkungslos. Analog spannt die Feder 36 den Kolben 38 in Richtung auf die Stellung B vor, wenn er sich in der Stellung C befindet. Dann ist die Feder 34 wirkungslos. Die vom Kolben 38 aufzubringenden Kräfte sind somit wesentlich vermindert.

Die Federn 34, 36 können derart dimensioniert sein, dass sie auch in der Gleichgewichtsposition Kräfte auf den Kolben 38 ausüben, die sich aber ausgleichen. Ein Vorteil liegt in dem möglichen steileren Kraftanstieg. Anzumerken ist, dass den in der Betriebsstellung und der Transportstellung zunächst auftretenden, dem weiteren Kraftverlauf entgegengerichteten Gesamtkräften durch eine andere Dimensionierung der Federn 34, 36 und/oder geeignete Beaufschlagung des Hydraulikzylinders 24 begegnet werden kann.

Die Federn 34, 36 könnten auch außerhalb des Gehäuses 32 des Hydraulikzylinders 24 angeordnet werden. Es wäre auch denkbar, nur eine einzige, auf Zug und Druck beanspruchbare Feder zu verwenden, deren Ruhelage zumindest näherungsweise mit der Gleichgewichtsposition (Figur 1b) zusammenfällt.

## Patentansprüche

1. Erntevorsatz (10) mit einem schwenkbar an einem Mittelteil (12) des Erntevorsatzes (10) angelenkten Seitenteil (14, 16), dem eine Verstelleinrichtung mit einem Verstellantrieb zugeordnet ist, der eingerichtet ist, den Seitenteil (14, 16) von der ersten Stellung über eine zweite Stellung in eine dritte Stellung zu bewegen, wobei der Seitenteil (14, 16) in der zweiten Stellung gegenüber der ersten Stellung und gegenüber der dritten Stellung angehoben ist, **dadurch gekennzeichnet, dass** der Seitenteil (14, 16) in seiner ersten Stellung durch eine Feder (34, 36) in Richtung auf die zweite Stellung hin vorgespannt ist und dass die Feder oder eine weitere Feder (34, 36) den Seitenteil aus der dritten Stellung in Richtung auf die zweite Stellung hin vorspannt.

2. Erntevorsatz (10) nach Anspruch 1, **dadurch gekennzeichnet, dass** die erste Stellung eine Betriebsstellung des Seitenteils (14, 16) ist, dass die zweite Stellung eine Zwischenstellung des Seitenteils (14, 16) ist, und dass die dritte Stellung eine Transportstellung des Seitenteils (14, 16) ist.

3. Erntevorsatz (10) nach Anspruch 2, **dadurch gekennzeichnet, dass** die Zwischenstellung eine Gleichgewichtsstellung des Seitenteils (14, 16) ist.

4. Erntevorsatz (10) nach einem der Ansprüche 1 bis 3, **dadurch gekennzeichnet, dass** der Seitenteil (14, 16) in der ersten Stellung starr mit dem Erntevorsatz (10) verbunden ist.

5. Erntevorsatz (10) nach einem der vorhergehenden Ansprüche, **dadurch gekennzeichnet, dass** der Seitenteil (14, 16) verschwenkbar ist.

6. Erntevorsatz (10) nach einem der vorhergehenden Ansprüche, **dadurch gekennzeichnet, dass** die Feder (34, 36) innerhalb eines Gehäuses (32) des Verstellantriebs angeordnet ist.

## Claims

1. Harvester head (10) having a side part (14, 16) which is articulated pivotably on a central part (12) of the harvester head (10) and to which an adjustment device with an adjustment drive is assigned, which drive is equipped to move the side part (14, 16) from the first position via a second position into a third position, the side part (14, 16) being raised in the second position relative to the first position and relative to the third position, **characterised in that** the side part (14, 16) is pretensioned in its first position by means of a spring (34, 36) in the direction towards the second position and **in that** the spring or a further spring (34, 36) pretensions the side part out of the third position in the direction towards the second position.

2. Harvester head (10) according to claim 1, **characterised in that** the first position is an operating position of the side part (14, 16), **in that** the second position is an intermediate position of the side part (14, 16) and **in that** the third position is a transport position of the side part (14, 16).

3. Harvester head (10) according to claim 2, **characterised in that** the intermediate position is an equilibrium position of the side part (14, 16).

4. Harvester head (10) according to one of the claims 1 to 3, **characterised in that** the side part (14, 16) is connected rigidly to the harvester head (10) in the first position.

5. Harvester head (10) according to one of the preceding claims, **characterised in that** the side part (14, 16) is pivotable.

6. Harvester head (10) according to one of the preceding claims, **characterised in that** the spring (34, 36) is disposed within a housing (32) of the adjustment drive.

## Revendications

1. Tête de récolte (10) comprenant une partie latérale (14, 16) articulée de façon pivotante sur une partie centrale (12) de la tête de récolte (10), à laquelle est attribué un dispositif de réglage avec une commande de réglage qui est aménagée pour déplacer la partie latérale (14, 16) de la première position à une troisième position en passant par une seconde position, la partie latérale (14, 16) étant soulevée dans la seconde position par rapport à la première position et par rapport à la troisième position, **caractérisée en ce que** la partie latérale (14, 16) dans sa première position est précontrainte par un ressort (34, 36) en direction de la seconde position et **en ce que** le ressort ou un autre ressort (34, 36) précontraint la partie latérale en direction de la seconde position à partir de la troisième position.

2. Tête de récolte (10) selon la revendication 1, **caractérisée en ce que** la première position est une position de service de la partie latérale (14, 16), **en ce que** la seconde position est une position intermédiaire de la partie latérale (14, 16) et **en ce que** la troisième position est une position de transport de la partie latérale (14, 16).

3. Tête de récolte (10) selon la revendication 2, **caractérisée en ce que** la position intermédiaire est une position d'équilibre de la partie latérale (14, 16).

4. Tête de récolte (10) selon l'une quelconque des revendications 1 à 3, **caractérisée en ce que** la partie latérale (14, 16) est reliée de façon rigide à la tête de récolte (10) dans la première position.

5. Tête de récolte (10) selon l'une quelconque des revendications précédentes, **caractérisée en ce que** la partie latérale (14, 16) est pivotante.

6. Tête de récolte (10) selon l'une quelconque des revendications précédentes, **caractérisée en ce que** le ressort (34, 36) est disposé à l'intérieur d'un boîtier (32) de la commande de réglage.
